# EUROPEAN PATENT SPECIFICATION

(11) **EP 2 860 227 B1**
(45) Date of publication and mention of the grant of the patent: **15.03.2017**
(21) Application number: 13188561.8
(22) Date of filing: 14.10.2013
(51) Int. Cl.: C09D 5/02, C09D 7/12, C09D 131/04

(54) **WATER-BASED COATING COMPOSITION**
WASSERBASIERTE BESCHICHTUNGSZUSAMMENSETZUNG
COMPOSITION DE REVÊTEMENT À BASE D'EAU

(43) Date of publication of application: 15.04.2015
(73) Proprietor: Henkel AG & Co. KGaA, 40589 Düsseldorf (DE)
(72) Inventor: Büsching, Hartmut, 32457 Porta Westfalica (DE); Eckers, Mario, 41844 Wegberg (DE); Hübenthal, Marcel, 42781 Haan (DE); Bochnia, Roland, 40723 Hilden (DE); Ewert, Sylvia, 31629 Estorf (DE)

(56) References cited:
- US-A1- 2012 214 007
- US-A1- 2013 130 025
- US-B1- 6 727 305

## Description

The present invention relates to an aqueous coating composition comprising synthetic polymers and inorganic fillers for coating and/or impregnating paper and nonwoven fabrics in general, in particular wallpapers as well as the use of such compositions.

Coating compositions for papers and nonwoven fabrics are generally known. However, known coating composition for such substrates, including for example wallpapers, include environmentally harmful substances, such as PVC and/or melamine (1,3,5-triazine-2,4,6-triamine) resins as well as volatile organic compounds. It is thus desirable to replace such compositions by more environmentally friendly water-based coating compositions. In addition, the compositions should provide for improved surface characteristics of the substrate, i.e. increase quality and performance, high embossing stability and barrier functions to improve water resistance.

US 2012/0214007 discloses pigmented paper coating compositions comprising a pigment dispersed in an aqueous dispersion of a polymeric binder that is a copolymer of vinyl acetate ethylene. US 6 727 305 discloses a filler containing polymer dispersion that comprises water, organic and/or inorganic filler particles and synthetic organic polymer particles that are polymerized in the presence of at least one type of filler and whereby the ratio of filler particle size to polymer particle size is 1.1:1-20:1.

The present invention meets this object and provides a water-based synthetic polymer containing coating composition for paper and nonwovens that provides for improved surface characteristics, good embossing stability, high water resistance, and increased production speeds. The invention is based on the inventors' surprising finding that by combining an aqueous dispersion of a synthetic polymer with a particle size d50 of ≤ 2 µm with an inorganic filler having a similar particle size, a high performance coating composition is obtained that upon application on paper or other nonwoven provides for a high quality substrate suitable for high speed digital printing, high embossing stability and high water resistance. It has further been found that the smaller the particle sizes of the fillers are the more stable the compositions get. In addition, smaller particle sizes have the advantage that the surface of the coated substrate gets smoother. d50 values of > 2 µm decrease storage stability and increase roughness of the surface of the coated substrates.

In a first aspect, the present invention thus relates to an aqueous coating composition for paper or nonwoven fabrics, wherein the composition includes:
(a) 20 to 80 wt.-%, preferably 35 to 55 wt.-%, of an aqueous dispersion of one or more synthetic polymers; and
(b) 20 to 70 wt.-%, preferably 35 to 55 wt.-%, of an inorganic filler.

The composition is characterized in that the particle size d50 of the synthetic polymer particles in the dispersion is ≤ 2 µm and the ratio of the particle size d50 of the synthetic polymer particles and the particle size d50 of the inorganic filler particles is in the range of 2:1 to 1:1

Another aspect of the invention is a method for coating a substrate, wherein the substrate is partially or completely coated with a coating composition as described herein.

In still another aspect, the present invention also encompasses the coated substrate obtainable according to the methods described herein.

In a further aspect, the invention also relates to the use of a coating composition as described herein for coating or impregnating a substrate.

The coating compositions of the present invention are aqueous systems, more particularly dispersions, with the term "dispersion", as used herein, encompassing dispersions, emulsions and solutions with water as the main solvent. These dispersions comprise solids in form of synthetic polymers and inorganic filler particles, but can further comprise emulsifiers and/or surfactants, pigments and/or dyes and optionally further additives. The aqueous dispersions may comprise small amounts of organic solvents, but are preferably essentially free of such organic solvents. The polymers may be non-reactive, but can alternatively also be crosslinking systems.

The polymers are preferably free of halogen-containing components, such as PVC, or melamine. Preferred synthetic polymers in the compositions of the present invention are polymers on the basis of (meth)acrylates, polyvinyl esters, and polyvinyl alcohols. The synthetic polymers may be homopolymers, copolymers or mixtures of distinct polymers. "Synthetic polymer", as used herein, relates to a non-naturally occurring polymer that is produced synthetically from building blocks, such as monomers or prepolymers.

"One or more", as used herein, relates to at least one and comprises 1, 2, 3, 4, 5, 6, 7, 8, 9 or more of the referenced species.

In various embodiments, suitable synthetic polymers are (co)polymerisates of olefinic unsaturated monomers. Preferred are water insoluble (co)polymers that are obtainable by radical polymerization of unsaturated monomers, such as vinyl ester polymers as homopolymers or copolymers, polyacrylic acid esters or polymethacrylic acid esters or copolymers with other monomers containing polymerisable double bonds.

Polyvinyl esters may be directly produced in form of dispersions or emulsions and are a preferred embodiment of the synthetic polymers of the present invention. In the polymers of the invention, the polymers predominantly comprise vinyl ester monomers, but can additional include polymerisable monomers that bear anionic functional groups, such as carboxy groups, unpolar, copolymerizable monomers, such as aromatic monomers or unsaturated carboxylic acid esters, or monomers with polar groups.

Copolymers are composed of different copolymerizable monomers. They can contain esters of vinyl alcohols and C2-C6 mono carboxylic acids, such as vinyl acetate, vinyl propionate, and vinyl n-butyrate.

Such polymers may additionally comprise copolymerizable monomers that include acidic groups. Such acidic groups may be inorganic acid groups, such as sulfonic acid, phosphoric acid or phosphonic acid groups, or preferably carboxylic acid groups. Such monomers contribute to the dispersibility in water.

Exemplary polyacrylates are those obtainable by (co)polymerization of at least one (meth)acrylate monomer. The monomers may be polar or unpolar and may comprise additional functional groups. Also possible is the use of additional copolymerizable monomers. By means of the selection of monomers, molecular weight, glass transition temperature, degree of crosslinking, hydrophobicity and/or solubility may be controlled.

Suitable monomers include, without limitation, (meth)acrylate esters, such as alkyl (meth)acrylates of straight chain, branched chain or cycloaliphatic alcohols with 1 to 40 carbon atoms, such as, for example, methyl (meth)acrylate, ethyl (meth)acrylate, n-butyl (meth)acrylate, 2-ethylhexyl (meth)acrylate, stearyl (meth)acrylate, lauryl (meth)acrylate, cyclohexyl (meth)acrylate, aryl (meth)acrylate, such as benzyl (meth)acrylate and phenyl (meth)acrylate, mono (meth)acrylate ethers, polyethylene glycols, polypropylene glycols or mixtures thereof with 5-80 carbon atoms, such as furfurylmethacrylate, 2-butoxyethylmethacrylate, poly(ethylene glycol)methyl ether-(meth)acrylate and poly(propylene glycol)methyl ether-(meth)acrylate. Also suitable are hydroxy-functionalized (meth)acrylates, such as hydroxyalkyl (meth)acrylates of straight chain, branched chain, or cycloaliphatic diols with 2-36 carbon atoms, for example 3-hydroxypropyl (meth)acrylate, 3,4-dihydroxybutyl mono (meth)acrylate, 2-hydroxyethyl (meth)acrylate, and 4-hydrocybutyl (meth)acrylate.

In addition to the afore-mentioned (meth)acrylates, the polymerizable compositions may comprise further unsaturated monomers which are copolymerizable with the (meth)acrylates disclosed above. Such copolymerizable monomers include, without limitation, acrylonitrile, vinyl esters, such as vinyl acetate, styrene, substituted styrenes, such as alpha-methyl styrene, vinyl toluene and p-methyl styrene, heterocyclic compounds, such as 2-vinyl pyridine, 3-vinyl pyridine, vinloxolane, vinyl furane, maleinic acid derivatives, such as maleinic acid anhydride, methyl maleinimide, and dienes, such as divinyl benzene, olefins, such as ethylene, butadiene, chlorobutadiene, isoprene, and other olefins without further functionalities, 1-alkenes, such as 1-hexene, branched alkenes, such as vinyl cyclohexane, itaconic acid, crotonic acid, maleinic acid, fumaric acid or monoesters thereof, (meth)acrylic acid, acryl amide, methacryl amide, epoxy acrylates or acrylates with other functional groups.

The afore-mentioned acrylates provide for a good water resistance of the coatings.

In various embodiments, the one or more synthetic polymers comprise at least one polyvinyl ester, preferably polyvinyl acetate. Even more preferred are combinations of such polyvinyl esters with acrylates or methacrylates, in particular an acrylate-styrene copolymer. Such polymer dispersions may additional comprise small amounts of polyvinyl alcohols.

The polymers may be non-reactive, but it is equally possible to use (self-)crosslinking polymers that crosslink at a later stage, for example by an oxidative reaction.

All above described polymers are commercially available. The skilled person is readily in a position to select suitable polymers based on the desired molecular weight, polarity, hydrophobicity, crosslinking moieties, and dispersibility.

The synthetic polymers are used in the form of aqueous dispersions that have a solid content of 30 to 75 wt.-%, commonly 40-60 wt.-%. Such dispersions are contained in amounts of 20 to 80 wt.-%, preferably 35 to 55 wt.-%, in the aqueous coating composition.

In various embodiments, the aqueous coating composition comprises an aqueous dispersion of one or more synthetic polymers which includes 20 to 60 wt.-%, preferably 30 to 40 wt.-% relative to the complete coating composition of an aqueous dispersion of a polyvinyl ester homo- or copolymer, preferably a polyvinyl acetate homo- or copolymer; and 0 to 20 wt.-%, preferably 5 to 15 wt.-% relative to the complete coating composition of an aqueous dispersion of a (meth)acrylic polymer, preferably styrene(meth)acrylate polymer. In even more preferred embodiments, the aqueous dispersion of one or more synthetic polymers further comprises polyvinyl alcohol, in an amount of up to 20 wt.-%, preferably 1 to 5 wt.-% relative to the complete coating composition.

The coating compositions described herein further include at least one inorganic filler, preferably in form of a solid, such as a powder. The inorganic filler may be selected from all suitable filler substances known to those skilled in the art. The filler may also be a pigment. Suitable fillers include, but are not limited to, oxides, phosphates, sulfates or carbonates of aluminum, silicon, zirconium, titanium, zinc, iron, manganese, or the earth alkaline metals, in particular calcium and magnesium. Exemplary fillers include calcium carbonate, titanium dioxide, zinc oxide, iron oxide, magnesium oxide, silica, alumina, barium sulfate, calcium sulfate and kaolin, or mixtures thereof, preferably calcium carbonate. Also included are hydrates of the afore-mentioned substances

As already mentioned above, in the compositions described herein the particle size d50 of the synthetic polymer particles in the dispersion is ≤ 2 µm, preferably ≤ 1,5 µm. The particle size d50 means that 50% of the particles satisfy the given requirement, i.e. their diameter in the biggest dimension is 2 µm or smaller and 1,5 µm or smaller, respectively.

In various embodiments, the particle size d90 of the synthetic polymer particles is ≤ 3,5 µm, preferably ≤ 3 µm. Similar to d50 above, the particle size d90 means that 90% of the particles satisfy the given requirement, i.e. their diameter in the biggest dimension is 3,5 µm or smaller and 3 µm or smaller, respectively.

The particle size of the inorganic filler material is preferably in the same range as the particle sizes of the synthetic polymers. It has been found that a particularly high quality product can be obtained if both, the polymer particles and the filler particles have a similar size and size distribution, with d50 ≤ 2 µm, preferably ≤ 1,5 µm and/or d90 ≤ 3,5 µm, preferably ≤ 3 µm. Accordingly, in the aqueous coating composition described herein, the ratio of the particle size d50 of the synthetic polymer particles and the particle size d50 of the inorganic filler particles is in the range of 2:1 to 1:1. Optionally, also the ratio of the particle size d90 of the synthetic polymer particles and the particle size d90 of the inorganic filler particles is in the range of 2:1 to 1:1.

The particle diameters can be determined by any suitable method. Exemplary methods include sieving methods, sedimentation methods and methods that are based on the diffraction of electromagnetic waves, in particular light. Also suited are electron microscopic techniques, such scanning electron microscopy and transmission electron microscopy, and laser diffraction spectroscopy. Preferably, particle sizes are determined by laser diffraction spectroscopy using a laser diffraction particle size analyzer, such as the Beckman Coulter LS 13 320.

The coating compositions can further comprise one or more additives. Such additives include stabilizers, antioxidants, photo stabilizers, wetting agents, pH regulators, plasticizers, pigments, dyes, catalysts, surfactants, emulsifiers, preservatives, fragrances and biocides. The amounts of volatile organic compounds in the compositions are however as low as reasonably achievable. Preferably, the compositions are free of volatile organic compounds and/or PVC and/or melamine. A "volatile organic compound" or "VOC", as used herein, refers to organic chemicals that have a high vapor pressure at ordinary, room-temperature conditions and can do damage to visual or audible senses. Their high vapor pressure results from a low boiling point of less than or equal to 250 °C measured at standard atmospheric pressure (1 bar), which causes large numbers of molecules to evaporate or sublimate from the liquid or solid form of the compound and enter the surrounding air. One example for such a compound is, without limitation PVC.

The compositions may comprise a surface active agent. These include compounds that influence surface tension, such as foam stabilizers, defoamers, surfactants and wetting agents. Such compounds generally include hydrophilic and hydrophobic groups. Such compounds can be added already during production of the polymer dispersion or are later added upon production of the coating composition. They are used for controlling foaming, increasing wettability, and stabilizing water insoluble polymer and filler particles. Such agents may include anionic, nonionic or ampholytic surfactants.

Suitable anionic surfactants include, but are not limited to alkyl sulfates, alkyl or aryl ether sulfates, such as alkyl phenol ether sulfates, sulfonates, in particular fatty alcohol sulfonates, alkyl sulfonates, alkyl aryl sulfonates, mono- and diesters of sulfo succinic acid, all optionally ethoxylated, alkaline metal or ammonium salts of carboxylic acids, such as fatty acids, partial esters of phosphoric acid and alkaline metal and ammonium salts thereof.

Suitable ampholytic surfactants include long chain substituted amino acids, such as N-alkyl-di(aminoethyl)glycine or N-Alkyl-2-aminopropionic acid salts, betains, such as N-(3-acylamidopropyl)-N,N-dimethylammonium salts or alkyl imidazolium betains.

Exemplary nonionic surfactants include, but are not limited to alkyl, aryl and fatty alcohol polyglycol ethers, ethyleneoxide/propyleneoxide (EO/PO)-block copolymers, -fatty alcohols, and alkyl phenol adducts, preferably those with 8 to 50 EO/PO units; addition products of alkyl amines, fatty acids and resin acids, alkyl polyglycosides with linear or branched, saturated or unsaturated alkyl groups with 8 to 24 carbon atoms and an oligoglycoside moiety, natural materials and their derivatives, such as lecithin, lanolin or sarcosine, in particular those with alkoxy groups of up to 10 carbon atoms and up to 30 EO or PO units.

In various embodiments, the coating composition comprises at least one surface active agent, such as an anionic or nonionic surfactant, in an amount of 0,01 to 5,0 wt.-%, for example 0,1 to 2,5 wt.-% relative to the complete composition.

As preservatives benzoates, fluorides, such as sodium fluoride, 5-chloro-2-methyl-4-isothiazolin-3-one (CMIT), 2-Methyl-4-isothiazolin-3-one (MIT), Bronopol (2-bromo-2-nitropropane-1,3-diol), amidic substances or hydroxybenzoic acid ester can be used. Such agents are used in amounts of 0,1 to 2,0 wt.-%. Further suitable additives are photo stabilizers in amounts of up to 2 wt.-%, preferably 0,1 to 1 wt.-%. Particularly useful are UV stabilizers, such as the so-called HALS (hindered amine light stabilizer) compounds.

Plasticizers are commonly used for controlling viscosity and flexibility and are usually present in amounts of 0 to 20 wt.-%, preferably up to 10 wt.-%, in particular below 2 wt.-%. Generally, it is desirable to keep the content of plasticizers as low as possible and the coating compositions described herein are advantageous in that they reduce the amount of plasticizer needed compared to common PVC-based compositions by more than 90 %. Exemplary plasticizers that may be used include, but are not limited to medicinal white oils, naphthenic mineral oils, polypropylene, polybutylene and polyisoprene oligomers, hydrogenated polyisoprene and/or polybutadiene oligomers, benzoate esters, phthalates, adipates, vegetable and animal oils and their derivatives. Hydrogenated plasticizers may for example be selected from the group of paraffin hydrocarbons. Polyproyplene glycol and polybutylene glycol as well as polymethylene glycol are also suited. Also esters can be used, such as liquid poly esters and glycerol esters or plasticizers on the basis of aromatic dicarboxylic acid esters. It is preferred that the compositions do not contain organic solvents.

The compositions may also include pigments, for example also in form of a dye paste. The amount of such pigments is usually below 30 wt.-%, preferably in the range of 5 to 20 wt.-%. Suitable pigments include those disclosed as fillers above.

The compositions described herein are preferably flee flowing liquids. In various embodiments they have a viscosity in the range of 500 to 10.000 mPas, preferably 1.000 to 8.000 mPas at 25°C. (Brookfield, EN, ISO 2555).

The coating compositions described herein can be produced from the described components by methods generally known in the art. The synthetic polymer is generally used in form of an aqueous dispersion in which all further components are dispersed. To obtain good storage stability, it is crucial to ensure a good distribution of the filler and pigments particles. Accordingly, one exemplary method for the production of an aqueous coating composition as described herein method comprises the steps of:
(a) providing an aqueous dispersion of one or more synthetic polymers;
(b) providing the inorganic filler in form of a powder;
(c) disperging the inorganic filler in the aqueous dispersion of one or more synthetic polymers by means of an automatic rotor-stator disperger.

Suitable automatic dispergers are known and commercially available. One exemplary disperger suited for this production method is the ystral Conti-TDS (Ystral, DE).

The composition should generally have a solid content in the range of 30 to 70 wt.-% (DIN 53189 at 105°C). The dispersing agent is predominantly water. The pH can be controlled by neutralizing agents and is usually in the range of 5 to 9.

The density of the composition is for example in the range of 1,0 to 1,7 g/cm³, as measured by a pycnometer.

In various embodiments, the invention also relates to a method for coating a substrate, wherein the substrate is partially or completely coated with a coating composition, the method comprising
(i) applying an aqueous coating composition as described herein to said substrate to obtain a coated substrate, and
(ii) drying said coated substrate.

For the methods of coating a substrate as described herein, the substrates are usually provided in shape of a web. The coating composition is then continuously applied on this substrate, either partially or completely. The application can be performed by a roll, nozzle, coating knife, screen or flexo printing. The aqueous coating composition can be applied in an amount of 10 to 100 g/m², preferably 20 to 40 g/m². After application, the applied coating composition is usually smoothened to ensure an even distribution and uniform thickness of the coating. The coated substrate may be dried, for example in an oven. Drying can be performed by warm air or irradiation with IR. The temperature in the drying step is usually in the range of 70 to 220°C and is selected such that a rapid drying is obtained. However, the temperature is also selected such that it does not adversely influence the structural integrity of the coating or the substrate. Preferred drying temperatures are in the range of 150 to 200°C and the drying time is 1 to 60 seconds, preferably 2 to 30 seconds.

The coated substrate can then be further processed. For example, it can be rolled up and stored. Alternatively, it may be subjected to printing, embossing and/or further coating. The coated substrates described herein are particularly suited for high speed digital printing due to their outstanding surface characteristics. After this processing, it can be cut to a desired length and stored. Suitable techniques are known in the art.

The substrate coated with the compositions of the present invention is preferably composed of hydrophilic polymers selected from the group consisting of polyesters and/or natural fibers, preferably cellulose or lignin. In various embodiments, the substrate is paper or a nonwoven fabric, preferably in form of a web. The nonwoven fabrics preferably comprise or consist of cellulose fibers.

Alternatively, the coating compositions described herein can be used as a binder that is directly added to the substrate, such as paper or nonwoven fabric, during its production.

In various embodiments, the present invention also encompasses the substrates obtainable by the above described coating methods or by adding the composition as a binding agent during production of the substrate.

The substrates obtained by the methods described herein include a base material that is usually flexible and is on one or both sides coated with a coating obtained by applying and drying a coating composition as described herein. The base material is preferably paper or a cellulose-based nonwoven fabric and is preferably used as a wallpaper. In one embodiment, the substrate, the coating or the surface of the coating is thus printed or dyed. In alternative or additional embodiments, the substrate or the coating is partially or completely embossed, preferably by cold embossing.

Also encompassed by the present invention is the use of the coating compositions described herein for coating or impregnating a substrate. The substrate may be as defined above. The coating or impregnating may be achieved by the above-described methods.

### Examples

### Example 1: Preparation of coating compositions

Coating compositions according to the present invention were prepared by dispersing fine powder filler materials, namely calcium carbonate, in an aqueous dispersion of polyvinyl acetate by means of an automatic rotor-stator disperger (ystral Conti-TDS) and the particle sizes of the different educts as well as the thus produced coating compositions were measured by laser diffraction in a Beckman Coulter LS 13 320 or in a Mastersizer S by Malvern Instruments. The results are shown in Table 1.

**Table 1: Particle sizes and particle size distribution of different compositions and educts**

| Product | | d10 (µm) | d50 (µm) | d90 (µm) | Particles < 2 µm (%) |
|---|---|---|---|---|---|
| Coating composition 1 (according to the invention:) Figure 1A | | 0,304 | 1,235 | 3,610 | 70 |
| Micral 1 | 14 % | | | | |
| Micral Opac extra | 14 % | | | | |
| Acrylate Dispersion | 7 % | | | | |
| KaMin 70C | 14 % | | | | |
| Wormalit PM 5208 | 35 % | | | | |
| Water | 16 % | | | | |
| Coating composition 2 (according to the invention:) Figure 1A | | 0,270 | 1,122 | 3,490 | 75 |
| Micral 1 | 11 % | | | | |
| Micral Opac extra | 11 % | | | | |
| Micral 95 T | 6 % | | | | |
| Acrylate Dispersion | 7 % | | | | |
| KaMin 70C | 14 % | | | | |
| Wormalit PM 5208 | 35 % | | | | |
| Wasser | 16 % | | | | |
| Polyvinyl acetate dispersion (Wormalit PM 5208 Henkel AG & Co.KGaA, Porta Westfalica, DE) | | 0,494 | 1,367 | 2,809 | 74 |
| Acrylate dispersion | | 0,562 | 1,647 | 3,432 | 70 |
| KaMin 70 C (Calcined Kaolin Clay) | | - | 1,3 | - | - |
| Micral 1 (calcium carbonate filler; S.A. Reverte, ES) | | - | 1,0 | - | 70 |
| Micral Opac extra (calcium carbonate filler; S.A. Reverte, ES) | | - | 0,9 | - | - |
| Microcarb 95 T (calcium carbonate filler; H. Heller GmbH, Wuppertal, DE) | | - | 0,65 | - | 94 |

### Example 2: SEM analysis of paper coated with the coating composition

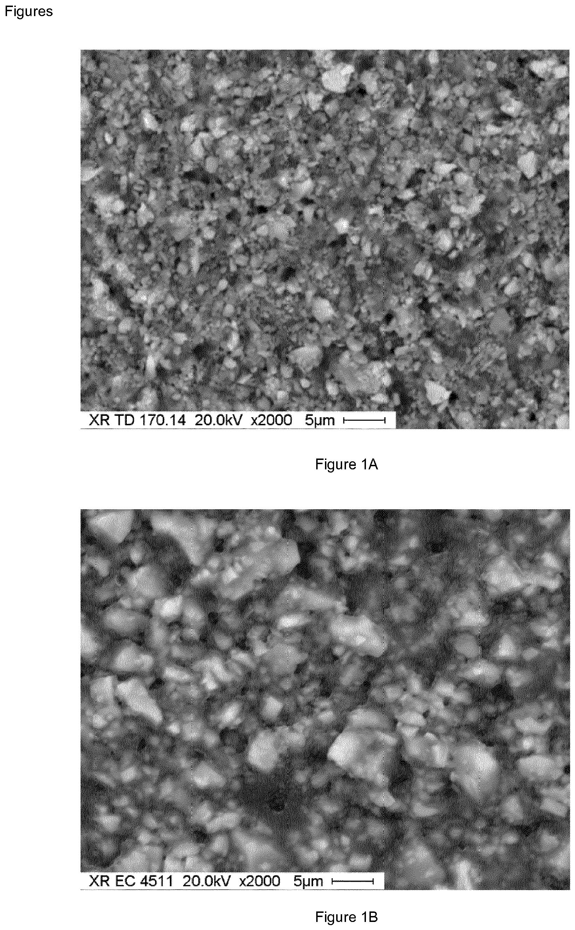

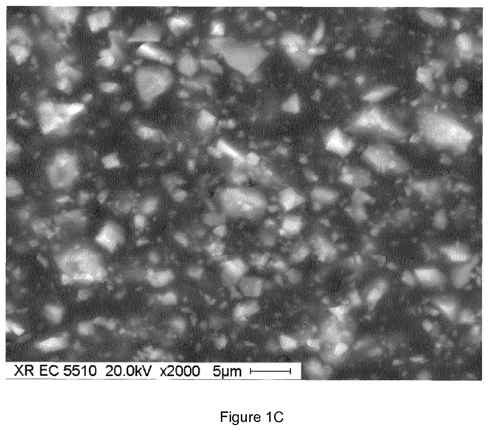

The surface of paper coated with the coating composition of the invention (see Example 1, composition 1) was analyzed by scanning electron microscopy (SEM). Images of the surface of the coating according to the invention are shown in Figure 1A. As a reference, SEM images of paper coated with known coating compositions (Table 2) are provided in Figures 1B and 1C. It is clearly apparent that the coating compositions of the present invention provide for a much smoother surface, which is desirable for high speed printing purposes.

**Table 2: Particle sizes and particle size distribution of different compositions and educts as standard reference**

| Product | | d10 (µm) | d50 (µm) | d90 (µm) | Particles < 2 µm (%) |
|---|---|---|---|---|---|
| Omycarb 2 - GU (Calcium carbonate filler; Omya GmbH Cologne) | | - | 2,5 | - | 40 |
| Polyvinyl acetate dispersion (Wormalit PM 5208 Henkel AG & Co.KGaA, Porta Westfalica, DE) | | 0,494 | 1,367 | 2,809 | 74 |
| Reference 1 (Figure 1 B) | | 0,562 | 1,178 | 7,206 | 45 |
| Polyvinyl acetate dispersion | 72 % | | | | |
| Omycarb 2 - GU | 28 % | | | | |
| Reference 2 (Figure 1 C) | | 0,347 | 1,647 | 5,413 | 45 |
| Polyvinyl acetate dispersion | 80 % | | | | |
| Omycarb 2 - GU | 20 % | | | | |

## Claims

1. Aqueous coating composition for paper or nonwoven fabrics, the composition comprising:
(a) 20 to 80 wt.-%, preferably 35 to 55 wt.-%, of an aqueous dispersion of one or more synthetic polymers; and
(b) 20 to 70 wt.-%, preferably 35 to 55 wt.-%, of an inorganic filler,
wherein the particle size d50 of the synthetic polymer particles in the dispersion is ≤ 2 µm and the ratio of the particle size d50 of the synthetic polymer particles and the particle size d50 of the inorganic filler particles is in the range of 2:1 to 1:1, wherein the particle size is determined by laser diffraction spectroscopy using a laser diffraction particle size analyzer.

2. The aqueous coating composition according to claim 1, wherein the aqueous dispersion of one or more synthetic polymers comprises
(i) 20 to 60 wit.-%, preferably 30 to 40 wt.-% relative to the complete coating composition of an aqueous dispersion of a polyvinyl ester homo- or copolymer, preferably a polyvinyl acetate homo- or copolymer; and
(ii) 0 to 20 wt.-%, preferably 5 to 15 wit.-% relative to the complete coating composition of an aqueous dispersion of a (meth)acrylic polymer, preferably styrene(meth)acrylate polymer.

3. The aqueous coating composition according to claim 2, wherein the aqueous dispersion of one or more synthetic polymers further comprises polyvinylalcohol, preferably in an amount of up to 20 wt.-% relative to the complete coating composition.

4. The aqueous coating composition according to any one of claims 1 to 3, wherein the inorganic filler is selected from the group consisting of calcium carbonate, titanium dioxide, zinc oxide, iron oxide, magnesium oxide, silica, alumina, barium sulfate, calcium sulfate, kaolin and mixtures thereof, preferably calcium carbonate.

5. The aqueous coating composition according to any one of claims 1 to 4, wherein the particle size d90 of the synthetic polymer particles is ≤ 3,5 µm, wherein the particle size is determined by laser diffraction spectroscopy using a laser diffraction particle size analyzer.

6. The aqueous coating composition according to claim 5, wherein the ratio of the particle size d90 of the synthetic polymer particles and the particle size d90 of the inorganic filler particles is in the range of 2:1 to 1:1, wherein the particle size is determined by laser diffraction spectroscopy using a laser diffraction particle size analyzer.

7. The aqueous coating composition according to any one of claims 1 to 6, wherein the coating composition is substantially free of volatile organic compounds and/or melamine and PVC.

8. The aqueous coating composition according to any one of claims 1 to 7, wherein the aqueous coating composition at 25 °C has a viscosity in the range of 500 to 10.000 mPas, as determined by Brookfield, EN, ISO 2555.

9. The aqueous coating composition according to any one of claims 1 to 8, wherein the aqueous coating composition further comprises one or more additives selected from the group consisting of stabilizers, antioxidants, photo stabilizers, wetting agents, pH regulators, plasticizers, pigments, dyes, catalysts, surfactants, emulsifiers, preservatives, fragrances and biocides.

10. Method for coating a substrate, wherein the substrate is partially or completely coated with a coating composition, comprising
(i) applying an aqueous coating composition according to any one of claims 1 to 9 to said substrate to obtain a coated substrate, and
(ii) drying said coated substrate.

11. The method according to claim 10, wherein the substrate is composed of hydrophilic polymers selected from the group consisting of polyesters and/or natural fibers, preferably cellulose or lignin.

12. The method according to claim 11, wherein the substrate is paper or a nonwoven fabric, preferably in form of a web.

13. Coated substrate obtainable according to the method of any one of claims 10 to 12.

14. The coated substrate according to claim 13, wherein the coated substrate is used for high speed digital printing and/or subjected to embossing.

15. Use of the coated substrate according to claim 13 or 14 as a wallpaper.

## Patentansprüche

1. Wässrige Beschichtungszusammensetzung für Papier oder Vliesstoffe, wobei die Zusammensetzung Folgendes umfasst:
(a) 20 bis 80 Gew.-%, vorzugsweise 35 bis 55 Gew.-%, einer wässrigen Dispersion aus einem oder mehreren synthetischen Polymeren; und
(b) 20 bis 70 Gew.-%, vorzugsweise 35 bis 55 Gew.-%, eines anorganischen Füllstoffs, wobei die Partikelgröße d50 der synthetischen Polymerpartikel in der Dispersion ≤ 2 µm beträgt und das Verhältnis der Partikelgröße d50 der synthetischen Polymerpartikel zu der Partikelgröße d50 der anorganischen Füllstoffpartikel im Bereich von 2:1 bis 1:1 liegt, wobei die Partikelgröße durch Laserbeugungsspektroskopie unter Verwendung eines Laserbeugungs-Partikelgrößenanalysators bestimmt wird.

2. Wässrige Beschichtungszusammensetzung nach Anspruch 1, wobei die wässrige Dispersion aus einem oder mehreren synthetischen Polymeren Folgendes umfasst:
(i) 20 bis 60 Gew.-%, vorzugsweise 30 bis 40 Gew.-% bezogen auf die vollständige Beschichtungszusammensetzung einer wässrigen Dispersion aus einem Polyvinylesterhomo- oder -copolymer, vorzugsweise einem Polyvinylacetathomo- oder -copolymer; und
(ii) 0 bis 20 Gew.-%, vorzugsweise 5 bis 15 Gew.-% bezogen auf die vollständige Beschichtungszusammensetzung einer wässrigen Dispersion aus einem (Meth)acrylpolymer, vorzugsweise einem Styrol(meth)acrylatpolymer.

3. Wässrige Beschichtungszusammensetzung nach Anspruch 2, wobei die wässrige Dispersion aus einem oder mehreren synthetischen Polymeren ferner Polyvinylalkohol umfasst, vorzugsweise in einer Menge von bis zu 20 Gew.-% bezogen auf die vollständige Beschichtungszusammensetzung.

4. Wässrige Beschichtungszusammensetzung nach einem der Ansprüche 1 bis 3, wobei der anorganische Füllstoff ausgewählt ist aus der Gruppe bestehend aus Calciumcarbonat, Titandioxid, Zinkoxid, Eisenoxid, Magnesiumoxid, Siliciumdioxid, Aluminiumoxid, Bariumsulfat, Calciumsulfat, Kaolin und Mischungen daraus, vorzugsweise Calciumcarbonat.

5. Wässrige Beschichtungszusammensetzung nach einem der Ansprüche 1 bis 4, wobei die Partikelgröße d90 der synthetischen Polymerpartikel ≤ 3,5 µm beträgt, wobei die Partikelgröße durch Laserbeugungsspektroskopie unter Verwendung eines Laserbeugungs-Partikelgrößenanalysators bestimmt wird.

6. Wässrige Beschichtungszusammensetzung nach Anspruch 5, wobei das Verhältnis der Partikelgröße d90 der synthetischen Polymerpartikel zu der Partikelgröße d90 der anorganischen Füllstoffpartikel im Bereich von 2:1 bis 1:1 liegt, wobei die Partikelgröße durch Laserbeugungsspektroskopie unter Verwendung eines Laserbeugungs-Partikelgrößenanalysators bestimmt wird.

7. Wässrige Beschichtungszusammensetzung nach einem der Ansprüche 1 bis 6, wobei die Beschichtungszusammensetzung im Wesentlichen frei von flüchtigen organischen Verbindungen und/oder Melamin und PVC ist.

8. Wässrige Beschichtungszusammensetzung nach einem der Ansprüche 1 bis 7, wobei die wässrige Beschichtungszusammensetzung bei 25 °C eine Viskosität im Bereich von 500 bis 10.000 mPas, bestimmt nach Brookfield, EN ISO 2555, aufweist.

9. Wässrige Beschichtungszusammensetzung nach einem der Ansprüche 1 bis 8, wobei die wässrige Beschichtungszusammensetzung ferner ein oder mehrere Additive umfasst, ausgewählt aus der Gruppe bestehend aus Stabilisatoren, Antioxidantien, Fotostabilisatoren, Benetzungsmitteln, pH-Regulatoren, Weichmachern, Pigmenten, Farbstoffen, Katalysatoren, Tensiden, Emulgatoren, Konservierungsmitteln, Duftstoffen und Bioziden.

10. Verfahren zum Beschichten eines Substrats, wobei das Substrat teilweise oder vollständig mit einer Beschichtungszusammensetzung beschichtet ist, Folgendes umfassend:
(i) Auftragen einer wässrigen Beschichtungszusammensetzung nach einem der Ansprüche 1 bis 9 auf das Substrat, um ein beschichtetes Substrat zu erhalten, und
(ii) Trocknen des beschichteten Substrats.

11. Verfahren nach Anspruch 10, wobei das Substrat aus hydrophilen Polymeren besteht, ausgewählt aus der Gruppe bestehend aus Polyestern und/oder Naturfasern, vorzugsweise Cellulose oder Lignin.

12. Verfahren nach Anspruch 11, wobei das Substrat Papier oder ein Vliesstoff ist, vorzugsweise in Form einer Bahn.

13. Beschichtetes Substrat, das nach dem Verfahren nach einem der Ansprüche 10 bis 12 erhältlich ist.

14. Beschichtetes Substrat nach Anspruch 13, wobei das beschichtete Substrat für Hochgeschwindigkeitsdigitaldrucken verwendet wird und/oder Prägen ausgesetzt wird.

15. Verwendung des beschichteten Substrats nach Anspruch 13 oder 14 als eine Tapete.

## Revendications

1. Composition aqueuse de revêtement pour papier ou non-tissés, la composition contenant :
a) 20 à 80 % en poids, de préférence 35 à 55 % en poids d'une dispersion aqueuse d'au moins un polymère synthétique ; et
b) 20 à 70 % en poids, de préférence 35 à 55 % en poids d'une charge minérale,
la taille de particules d50 des particules de polymère synthétique dans la dispersion étant ≤ 2 µm, et le rapport de la taille de particules d50 des particules de polymère synthétique et de la taille de particules d50 des particules de charge minérale étant dans la gamme de 2:1 à 1:1, la taille des particules étant déterminée par spectroscopie par diffraction laser avec un granulomètre à diffraction laser.

2. Composition aqueuse de revêtement selon la revendication 1, dans laquelle la dispersion aqueuse d'au moins un polymère synthétique contient :
i) 20 à 60 % en poids, de préférence 30 à 40 % en poids par rapport à la composition de revêtement complète, d'une dispersion aqueuse d'un homo- ou copolymère polyester de vinyle, de préférence un homo- ou copolymère polyacétate de vinyle ; et
ii) 0 à 20 % en poids, de préférence 5 à 15 % en poids par rapport à la composition de revêtement complète, d'une dispersion aqueuse d'un polymère (méth)acrylique, de préférence un polymère de (méth)acrylate de styrène.

3. Composition aqueuse de revêtement selon la revendication 2, dans laquelle la dispersion aqueuse d'au moins un polymère synthétique contient en outre de l'alcool polyvinylique, de préférence à hauteur de jusqu'à 20 % en poids par rapport à la composition de revêtement complète.

4. Composition aqueuse de revêtement selon l'une quelconque des revendications 1 à 3, dans laquelle la charge minérale est choisie dans le groupe constitué du carbonate de calcium, du dioxyde de titane, de l'oxyde de zinc, de l'oxyde de fer, de l'oxyde de magnésium, de la silice, de l'alumine, du sulfate de baryum, du sulfate de calcium, du kaolin et de leurs mélanges, de préférence du carbonate de calcium.

5. Composition aqueuse de revêtement selon l'une quelconque des revendications 1 à 4, dans laquelle la taille de particule d90 des particules de polymère synthétique est ≤ 3,5 µm, la taille des particules étant déterminée par spectroscopie par diffraction laser avec un granulomètre à diffraction laser.

6. Composition aqueuse de revêtement selon la revendication 5, dans laquelle le rapport de la taille de particules d₉₀ des particules de polymère synthétique et de la taille de particules d₉₀ des particules de charge minérale étant dans la gamme de 2:1 à 1:1, la taille des particules étant déterminée par spectroscopie par diffraction laser avec un granulomètre à diffraction laser.

7. Composition aqueuse de revêtement selon l'une quelconque des revendications 1 à 6, la composition de revêtement étant fondamentalement exempte de composés organiques volatiles et/ou de mélamine et de PVC.

8. Composition aqueuse de revêtement selon l'une quelconque des revendications 1 à 7, la composition aqueuse de revêtement à 25°C ayant une viscosité entre 500 et 10 000 mPa.s, comme déterminée par Brookfield, EN, ISO 2555.

9. Composition aqueuse de revêtement selon l'une quelconque des revendications 1 à 8, la composition aqueuse de revêtement contenant en outre au moins un additif choisi dans le groupe constitué de stabilisants, antioxydants, photostabilisateurs, agents mouillants, régulateurs de pH, plastifiants, pigments, colorants, catalyseurs, tensioactifs, émulsifiants, conservateurs, parfums et biocides.

10. Procédé de revêtement d'un substrat, dans lequel le substrat est partiellement ou entièrement recouvert d'une composition de revêtement, comprenant :
i) l'application d'une composition aqueuse de revêtement selon l'une quelconque des revendications 1 à 9 sur ledit substrat pour obtenir un substrat recouvert, et
ii) le séchage dudit substrat recouvert.

11. Procédé selon la revendication 10, dans lequel le substrat est constitué de polymères hydrophiles choisis dans le groupe constitué de polyesters et/ou de fibres naturelles, de préférence cellulose ou lignine.

12. Procédé selon la revendication 11, dans lequel le substrat est du papier ou un non-tissé, de préférence sous la forme d'une toile.

13. Substrat recouvert que l'on peut obtenir selon le procédé de l'une quelconque des revendications 10 à 12.

14. Substrat recouvert selon la revendication 13, le substrat recouvert étant utilisé pour l'impression numérique à grande vitesse et/ou étant soumis à embossage.

15. Utilisation du substrat recouvert selon la revendication 13 ou 14 comme papier peint.
